# EUROPÄISCHE PATENTSCHRIFT

(11) **EP 2 557 315 B1**
(45) Veröffentlichungstag und Bekanntmachung des Hinweises auf die Patenterteilung: **29.04.2020**
(21) Anmeldenummer: 12179474.7
(22) Anmeldetag: 07.08.2012
(51) Int. Cl.: F04D 19/04, F04D 29/08, F04D 29/063, F04D 29/059, F16C 19/00

(54) **WÄLZLAGER UND VAKUUMPUMPE MIT WÄLZLAGER**
ROLLER BEARING AND VACUUM PUMP WITH SAME
PALIER À ROULEMENT ET POMPE À VIDE DOTÉE D'UN PALIER À ROULEMENT

(30) Priorität: 10.08.2011 DE 102011109930
(43) Veröffentlichungstag der Anmeldung: 13.02.2013
(73) Patentinhaber: Pfeiffer Vacuum GmbH, 35614 Aßlar (DE)
(72) Erfinder: Mekota, Mirko, 35630 Ehringshausen (DE); Vorwerk, Peter, 35630 Ehringhausen (DE)
(74) Vertreter: Knefel, Cordula

(56) Entgegenhaltungen:
- EP-A2- 1 972 794
- WO-A1-2004/097224
- WO-A1-2010/051959
- DE-A1-102006 053 237
- JP-U- H0 471 817
- JP-U- S5 032 451
- US-A- 2 271 820
- US-A- 2 452 719

## Beschreibung

Die Erfindung betrifft eine Vakuumpumpe nach dem Oberbegriff des Anspruches 1 und ein Wälzlager nach dem Oberbegriff von Anspruch 12.

Vakuumpumpen, die als Strömungsarbeitsmaschinen gestaltet sind und beispielsweise auf einem molekularen oder dem Seitenkanalprinzip basieren, weisen wenigstens einen schnell drehenden Rotor auf. Dieser Rotor ist bei Drehzahlen von einigen zehntausend Umdrehungen pro Minute drehbar zu unterstützen. Für diese Funktion sind Wälzlager hervorragend geeignet und kommen daher sehr oft zum Einsatz. Diese Wälzlager müssen geschmiert werden.

Im Stand der Technik sind hierzu verschiedene Arten von Schmiermittelkreisläufen bekannt.

Die DE 103 21 326 A1 schlägt vor, eine Ölpumpe in einem ringförmigen Reservoir anzuordnen. Die Ölpumpe ist zweiflutig ausgeführt und fördert Öl auf eine wellenseitig angeordnete konische Mutter, die durch Fliehkraftwirkung das Öl in das Wälzlager weiterfördert. Das Öl rieselt aus dem Wälzlager in Schwerkraftrichtung heraus und in das Reservoir zurück, zudem sorgt eine Labyrinthanordnung für die Abdichtung zum Schöpfraum der Pumpe.

Bei Vakuumpumpen mit kleinen Baugrößen kommt eine so genannte Filzschmierung zum Einsatz. Ein Beispiel für einen geschlossenen Kreislauf stellt die DE 10 2006 053 237 A1 vor. Ein Filzpaket dient als Schmiermittelspeicher, aus welchem über einen Docht Schmiermittel auf einen wellenseitigen Konus übertragen wird. An diesem entlang wandert Schmiermittel in das Wälzlager. Das aus dem Wälzlager austretende Schmiermittel wird über kapillare Fördermittel zum Schmiermittelspeicher zurückgefördert.

Es wird beobachtet, dass zwar langsam, aber auf Dauer doch nachweisbar, die Schmiermittelmenge abnimmt. Dies verkürzt die Zeit zwischen notwendigen Servicearbeiten an der Pumpe.

Zum Stand der Technik (DE 10 2006 053 237 A1) gehört ein Lagermodul für eine Vakuumpumpe. In diesem Lagermodul ist ein Schmiermittelspeicher vorhanden, der aus einem saugfähigen und über Kapillarkräfte fördernden Material, beispielsweise Filz aufgebaut ist. Die Schmiermittelrückförderung gemäß diesem zum Stand der Technik gehörenden Lagermodul kann noch weiter verbessert werden.

Weiterhin gehört zum Stand der Technik (US 2,271,820 A) ein Wälzlager. Bei diesem Wälzlager ist ein Dichtelement am Außenring des Wälzlagers angeordnet. Außerhalb des Dichtringes ist ein Schmiermittelreservoir vorgesehen. Auch dieses zum Stand der Technik gehörende Wälzlager kann weiter verbessert werden.

Darüber hinaus gehört zum Stand der Technik (US 2,452,719 A) ein Wälzlager, bei dem ebenfalls ein Schmiermittelspeicher vorgesehen ist. Dieses zum Stand der Technik gehörende Wälzlager ist hinsichtlich der Schmiermittelführung noch weiter zu verbessern.

Auch die zum Stand der Technik (EP 1 972 794 A2) gehörende Vakuumpumpe, die ein schmiermittelgelagertes Wälzlager zeigt, kann hinsichtlich der Schmiermittelführung noch weiter verbessert werden.

Es ist daher Aufgabe der Erfindung, einen verbesserten Schmiermittelkreislauf vorzustellen.

Die Aufgabe wird gelöst durch ein Wälzlager mit den Merkmalen gemäß Anspruch 1 und einer Vakuumpumpe mit den Merkmalen gemäß Anspruch 2. Die abhängigen Ansprüche 3 bis 12 geben vorteilhafte Weiterbildungen an.

Ein Wälzlager mit Dichtelement und Ablaufkanal mit den vorgenannten Merkmalen verbessert den Schmiermittelkreislauf, da durch die Abdichtung des Lagers überzähliges Schmiermittel bereits im Wälzlager aufgefangen wird und so die Schmiermittelverluste verringert werden. Das Dichtelement wirkt mit einem Ablaufkanal zusammen, der die Rückführung des Schmiermittels durch gezieltere Entnahme des Schmiermittels aus dem Wälzlager verbessert.

Ein weiterer Vorteil ergibt sich, wenn das Dichtelement zwischen Pumpstufe und Wälzelementen angeordnet ist, denn hierdurch werden Verluste im Schmiermittelkreislauf deutlich verringert, wenn die Vakuumpumpe kopfüber, also mit dem Wälzlager bezogen auf die Schwerkraftrichtung oberhalb der Pumpstufe, betrieben wird. Je nach Schmiermittelmenge und Größe der Vakuumpumpe wird der Kopfüberbetrieb durch die Merkmale der Ansprüche überhaupt erst ermöglicht. Durch die geringeren Verluste in Richtung Pumpstufe wird das von der Vakuumpumpe erzeugte Vakuum zudem reiner, das heißt freier von Kohlenwasserstoffen. Aufgrund der hohen Kompression für Kohlenwasserstoffe von Molekularpumpen war dieser Effekt bei Molekularpumpen in der beobachteten Form für die Erfinder überraschend. Die sehr gute Dichtwirkung des Dichtelementes beruht unter anderem darauf, dass es mit dem Wälzlager zusammen schwingfähig gefasst ist. Dies ermöglicht sehr enge Spalte zwischen drehenden und nichtdrehenden Teilen der Dichtung. Diese sind enger als beispielsweise Spalte zwischen der Welle und den Pumpengehäuseteilen, da die Welle aus ihrer Normallage mitunter um einige Zehntel Millimeter ausgelenkt werden muss, worauf die Spalte zwischen Welle und Pumpengehäuse ausgelegt sind.

Eine vorteilhafte Ausführungsform der Erfindung sieht vor, dass das Dichtelement auf der der Pumpstufe zugewandten Seite einer Ebene der Wälzelemente angeordnet ist.

Diese Ausführungsform weist den Vorteil auf, dass in Richtung der Bauteile, die für die Erzeugung des Vakuums vorgesehen sind, eine Schmiermittelabdichtung vorgesehen ist, da insbesondere in dieser Richtung Schmiermittel nicht in die Vakuumpumpe gelangen soll.

Gemäß einer weiteren vorteilhaften Ausführungsform der Erfindung ist vorgesehen, dass das Dichtelement ein statisches Dichtelement umfasst, welches mit dem Ablaufkanal zusammenwirkt. Diese Ausführungsform weist den Vorteil auf, dass das statische Dichtelement relativ preisgünstig, beispielsweise in Form eines Flansches mit einem daran fest angeordneten Wall, herstellbar ist.

Vorteilhaft weist das statische Dichtelement einen umlaufenden Wall auf, der mit dem Außenring und einem Flansch ein Volumen begrenzt, in welchem das Schmiermittel gesammelt wird, und bei dem ein Ablaufkanal zum Abführen des Schmiermittels aus dem Volumen vorgesehen ist.

Diese Ausführungsform ist relativ einfach aufgebaut und gewährleistet eine sichere Abführung des Schmiermittels.

Vorteilhafterweise sind der umlaufende Wall und der Flansch einstückig ausgeführt. Hierdurch erhält man eine preisgünstige Ausführungsform des statischen Dichtelementes.

Gemäß einer weiteren vorteilhaften Ausführungsform der Erfindung sind der Außenring, der umlaufende Wall und der Flansch einstückig ausgeführt. Hierdurch wird eine weitere Kostenersparnis erzielt. Darüber hinaus ist die Montage einfacher, da weniger Teile einzubauen sind.

Gemäß der Erfindung ist vorgesehen, dass das Dichtelement ein dynamisches Dichtelement umfasst. Das dynamische Dichtelement weist eine auf einer Außenfläche des Innenringes angeordnete Spritzkante auf. Diese Ausführungsform weist den Vorteil auf, dass Schmiermittel, welches in Richtung der Welle geführt werden sollte, durch die Spritzkante in das vorgesehene Volumen zum Sammeln des Schmiermittels abtropfen kann.

Die Erfindung sieht vor, dass das Dichtelement einen umlaufenden Wall, der mit dem Außenring und dem Flansch ein Volumen begrenzt, in welchem das Schmiermittel gesammelt wird, welches das Volumen durch den Ablaufkanal verlassen kann und eine Spritzkante umfasst, durch welche das Schmiermittel dem Volumen zugeführt wird.

Durch dieses erfindungsgemäße Dichtelement wird eine zuverlässige Abführung des überschüssigen Schmiermittels gewährleistet.

Eine weitere vorteilhafte Ausführungsform der Erfindung sieht vor, dass die Vakuumpumpe eine schnelldrehende Welle aufweist, die von dem wenigstens einen Wälzlager unterstützt wird. Auf diese Art und Weise ist das Wälzlager beispielsweise in Turbomolekularpumpen einsetzbar.

Vorteilhaft weist die wenigstens eine Pumpstufe einen molekularen Pumpabschnitt auf. Diese Ausführungsform kann beispielsweise eine übliche Turbomolkularpumpstufe sein.

Das erfindungsgemäße Wälzlager, insbesondere für eine Vakuumpumpe mit wenigstens einem Innenring, wenigstens einem Außenring und Wälzelementen, wobei das Wälzlager wenigstens ein dynamisches Dichtelement und wenigstens einen Ablaufkanal aufweist, der als ein eine Verbindung zwischen einem von dem Dichtelement begrenzten Volumen und einer außerhalb des Wälzlagers vorgesehenen Rückführung bildender Ablaufkanal ausgebildet ist, zeichnet sich dadurch aus, dass das dynamische Dichtelement eine auf einer Außenfläche des Innenrings angeordnete Spritzkante umfasst.

Dieses erfindungsgemäße Wälzlager weist den Vorteil auf, dass überschüssiges Schmiermittel zuverlässig aus dem Wälzlager abgeführt wird.

Anhand von Ausführungsbeispielen und deren Weiterbildungen soll die Erfindung näher erläutert und die Darstellung ihrer Vorteile vertieft werden. Es zeigen:
- Fig. 1: einen Längsschnitt durch eine Vakuumpumpe entlang der Rotorachse gemäß erstem Beispiel;
- Fig. 2: einen Schnitt durch die Lageranordnung nach Fig. 1;
- Fig. 3: eine schematische Darstellung von Rotor, Lager und Schmiermittelkreislauf gemäß zweitem Beispiel;
- Fig. 4: einen Schnitt durch ein Wälzlager mit einstückig ausgeführten Elementen;
- Fig. 5: einen Schnitt durch ein Wälzlager mit angesetztem Dichtelement;
- Fig. 6: einen Schnitt durch ein Wälzlager mit Dichtungselementen an beiden Stirnseiten;
- Fig. 7: eine perspektivische Teildarstellung eines Dichtungselementes.

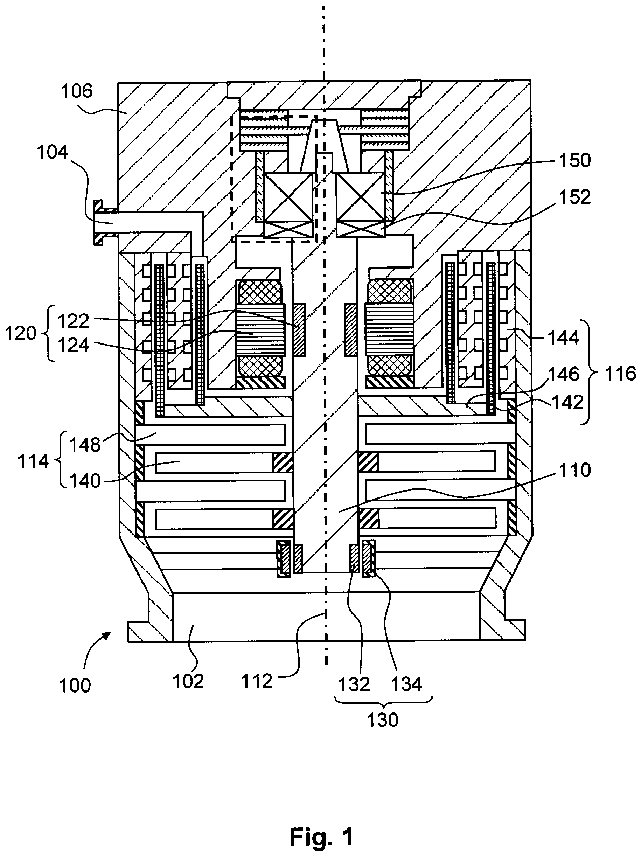

In Fig. 1 ist ein Schnitt durch eine Vakuumpumpe 100 gezeigt. Sie ist im Kopfüberbetrieb dargestellt, die Schwerkraftrichtung ist in der Figur auf die untere Blattkante gerichtet.

Die Vakuumpumpe 100 saugt Gas durch eine im mehrteiligen Gehäuse 106, welches die Gehäuseteile 106a, 106b aufweist, vorgesehene Ansaugöffnung 102 auf und stößt dieses verdichtet aus dem Gasauslass 104 aus. Bewirkt wird die Verdichtung des Gases von einem im vorgestellten Beispiel turbomolekular gestalteten Pumpmechanismus, der beschaufelte Rotorscheiben 140 umfasst, die sich mit ruhenden und ebenfalls beschaufelten Statorscheiben 148 entlang der Wellenachse 112 abwechseln. Oft wird die Gesamtheit aller Rotor- und Statorscheiben als Pumpstufe 114 bezeichnet. Eine solche Pumpstufe 114 kann eines oder mehrere Paare aus Rotor- und Statorscheiben 140, 148 beinhalten. Insbesondere wird die Bezeichnung Pumpstufe gewählt, wenn die Vakuumpumpe 100 noch eine weitere Pumpstufe mit anderem Wirkprinzip umfasst. Im gezeigten Beispiel ist eine so genannte Holweckpumpstufe 116 vorgesehen, die vorhanden sein kann, aber nicht vorhanden sein muss. Sie umfasst wenigstens einen Zylinder 142, der an einer Nabe 146 befestigt ist und in einem mit gewindeartig angeordneten Kanälen versehenen Holweckstator 144 rotiert. Rotorscheiben 140, Nabe 146 und Zylinder 142 sind an einer Welle 110 befestigt.

Ein Antrieb 120 versetzt die Welle in schnelle Drehung, wobei die Drehzahl vom Wirkprinzip der Pumpstufen abhängt, für molekulare Vakuumpumpen im Bereich einiger zehntausend Umdrehungen pro Minute liegt. Der Antrieb umfasst eine Motorspule 124, durch deren Bestromung ein rotierendes Magnetfeld erzeugt wird, welches einen auf der Welle angebrachter Motormagnet 122 mitnimmt.

Die Welle 110 wird an ihrem der Ansaugöffnung 102 zugewandten Ende von einem Permanentmagnetlager 130 getragen, welches aus permanentmagnetischen Rotormagnetringen 132 und Statormagnetringen 134 aufgebaut ist. Dieses Lager 130 muss nicht zwingend als Permanentmagnetlager ausgeführt und am Wellenende angeordnet sein. Ein Wälzlager, welches auf der der Ansaugöffnung abgewandten Seite der Pumpstufe angeordnet ist, kann ebenfalls die Tragfunktion übernehmen.

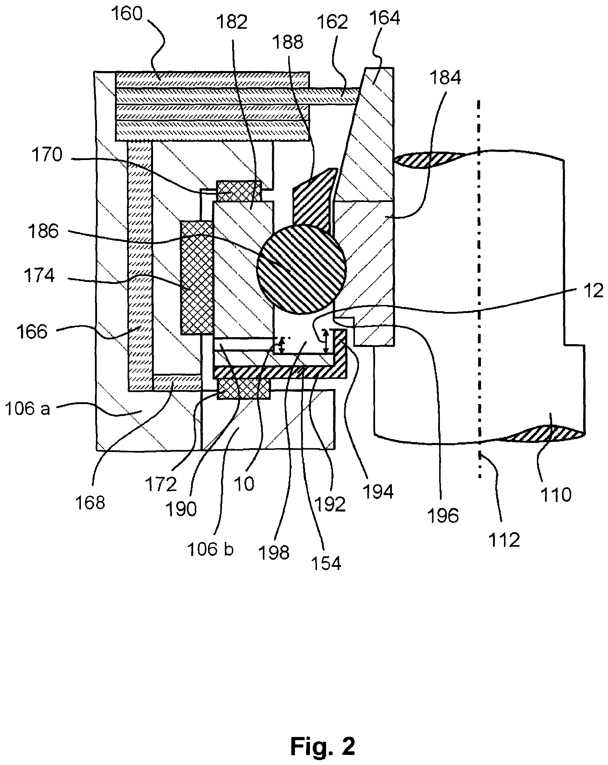

Das der Ansaugöffnung 102 abgewandte Ende der Welle 110 wird von einer Lageranordnung unterstützt, die ein Wälzlager 150 und ein zwischen Wälzlager 150 und Pumpstufe angeordnetes Dichtelement 152 enthält und anhand Fig. 2 näher erläutert werden wird.

In Fig. 2 ist der in Fig. 1 gestrichelte umrahmte Abschnitt, der einen Teilschnitt durch den Lagerbereich zeigt, im Detail dargestellt.

Auf der Welle 110 sind eine konische Mutter 164 und ein Innenring 184 des Wälzlagers 150 befestigt. Konzentrisch zum Innenring 184 ist ein Außenring 182 des Wälzlagers 150 vorgesehen. Zwischen Innenring 184 und Außenring 182 befinden sich Wälzelemente 186, die von einem Käfig 188 geführt sein können.

Der Außenring 182 ist schwingfähig gelagert. Hierzu befinden sich ein erster und ein zweiter elastischer Ring 170 und 172 auf Stirnseiten des Außenringes 182, wodurch die Schwingfähigkeit in axialer Richtung bewirkt wird. Ein dritter elastischer Ring 174 umgibt eine äußere Mantelfläche des Außenringes 182 und bewirkt so eine in radialer Richtung schwingfähige Halterung des Außenringes 182 im Gehäuse 106. Die Ringe 170, 172, 174 können als Elastomerringe ausgeführt sein. Flexible und metallische Halteelemente können alternativ oder zusätzlich zu den elastischen Ringen 170, 172, 174 vorgesehen sein.

Schmiermittel, beispielsweise Öl, ist in einem Schmiermittelspeicher 160 gespeichert, der aus saugfähigem Material mit kapillarer Wirkung besteht, beispielsweise aus einem Filz. Ein Docht 162 befindet sich in berührendem und gleitendem Kontakt mit der konischen Mutter 164, so dass Schmiermittel aus dem Schmiermittelspeicher 160 auf die konische Oberfläche der Mutter 164 gelangen kann. Bei Drehung der Welle 110 entsteht auf dem Konus durch Fliehkräfte eine Förderung des Schmiermittels zum Lager 150 hin. Ist die Vakuumpumpe 100 so orientiert, dass die Schwerkraft in der Fig. 2 im Wesentlichen nach oben zeigt, fällt das Schmiermittel aus dem Wälzlager zurück in den Schmiermittelspeicher.

Der Docht 162 und/oder die Rückführung 166 und/oder ein Radialfördermittel 168 bestehen ebenfalls aus einem saugfähigem Material mit kapillarer Wirkung, beispielsweise aus einem Filz.

Ist die Vakuumpumpe derart orientiert, dass die Schwerkraft in der Fig. 2 im Wesentlichen auf die untere Blattkante gerichtet ist, läuft Folgendes ab: Das Schmiermittel fällt aus dem Bereich mit den Wälzelementen in ein Volumen 198. Das Volumen 198 ist in einer äußeren radialen Richtung vom Außenring 182 des Wälzlagers 150 begrenzt. In axialer Richtung begrenzt ein Flansch 192 das Volumen. In innerer radialer Richtung, die dem Innenring 184 des Lagers 150 benachbart ist, schafft ein statisches Dichtelement die Begrenzung, welches im gezeigten Beispiel als ein am inneren der Welle 110 zugewandten Rand des Flansches 192 umlaufender Wall 194 gestaltet ist. In diesem Volumen wird Schmiermittel aufgefangen und gesammelt und läuft dann durch einen Ablaufkanal 190 aus dem Wälzlager 150 ab. Nachfolgend wird es von einer Rückführung 166 zum Schmiermittelspeicher 160 zurückgeführt. Diese Rückführung 166 kann Stäbe aus saugfähigem Material mit kapillarer Förderwirkung umfassen.

Um eine besonders gute Wirkung zu erzielen, kann eine Höhe 12 des Walles 194 in der Richtung parallel zur Wellenachse 112 weiter von einer Stirnseite 154 des Wälzlagers 150 entfernt sein als eine Höhe 10 in achsparalleler Richtung der Mündung des Ablaufkanals 190 in das Volumen.

Durch diese Ausbildung wird ein Überfließen des Walles 194 durch das Schmiermittel vermieden, da die Höhe 12 größer ist als die Höhe 10. Auf diese Weise ist gewährleistet, dass das Schmiermittel auf jeden Fall durch den Ablaufkanal 190 abfließt und nicht über den Wall 194 in Richtung der Pumpstufen übertritt.

Das durch den Wall 194 begrenzte Volumen zum Sammeln des Schmiermittels schafft den Vorteil, dass das Schmiermittel zunächst aufgefangen wird, bevor es zur Rückführung gelangt. Im Vergleich mit einem sich lediglich in radialer Richtung erstreckenden Flansch wird die Dichtungswirkung deutlich erhöht, da der Wall das Schmiermittel am Fließen in den Spalt zwischen Flansch 192 und Welle 110 hindert.

Der Flansch 192 kann einteilig ausgeführt sein. Alternativ kann er teilweise von einem Ansatz des Außenringes 182 und einem weiteren Bauteil gebildet werden. In der Fig. 2 ist ein Bauteil mit winkligem Querschnitt gezeigt, wobei ein Winkel Teil des Flansches 192 bildet und der andere Winkel den Wall 194 schafft. Dies lässt sich günstig herstellen. Zudem erleichtert dies das Befüllen des Wälzlagers 150 mit Kugeln, wenn ein Rillenkugellager mit einteiligem Innenring eingesetzt wird. Das Material dieses Bauteiles kann zudem im Hinblick auf die Reibung mit dem Ring 172 optimiert sein.

Der Innenring 184 des Wälzlagers 150 kann ein dynamisches Dichtelement umfassen, welches im Beispiel nach Fig. 2 als Spritzkante 196 gestaltet ist. Diese ist so angeordnet und dimensioniert, dass Schmiermittel, welches sich aus dem Bereich der Wälzelemente in die dem Konus gegenüberliegende Richtung bewegt, abgeschleudert wird und entweder unmittelbar innerhalb des Volumens 198 aufgefangen wird oder den Außenring 182 trifft und von dort in das Volumen 198 fließt. Diese Spritzkante 196 führt zu einer deutlichen Steigerung der Dichtwirkung, was auf dem Zusammenwirken mit dem Volumen 198 beruht.

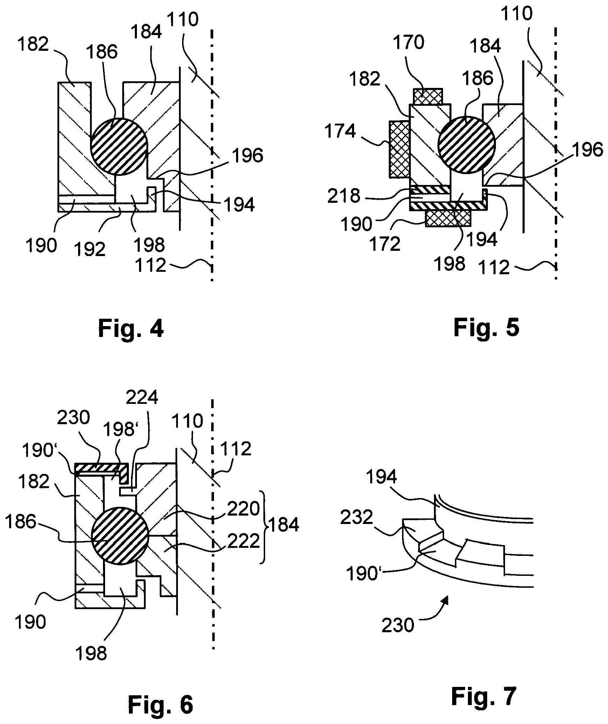

Das in Fig. 1 lediglich schematisch dargestellte Dichtelement 152 kann, wie in Fig. 4 dargestellt, den Flansch 192 und den Wall 194 aufweisen. Das Dichtelement 152 umfasst darüber hinaus vorteilhaft die Spritzkante 196.

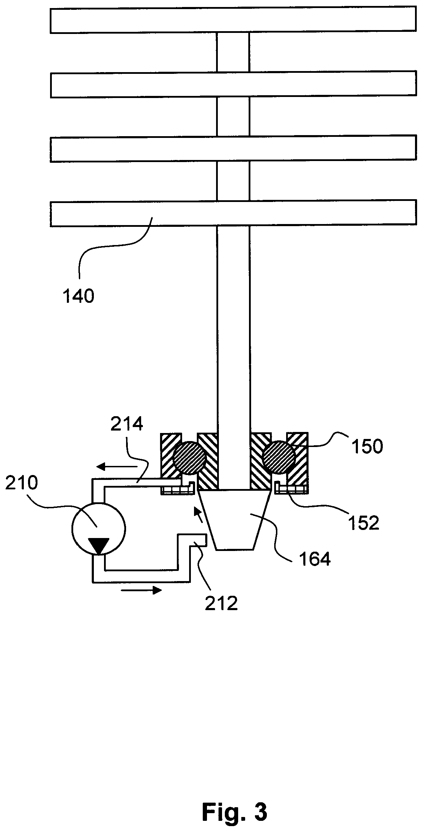

Das vorgestellte Dichtelement lässt sich auch auf der der Pumpstufe abgewandten Seite oder auf beiden Seiten anwenden. In Fig. 3 ist der prinzipielle Aufbau einer solchen Anordnung gezeigt. Das Dichtelement 152 und ein Ablauf werden genutzt, um aus dem Wälzlager 150 ablaufendes Schmiermittel aufzufangen und einem Schmiermittelpumpenzulauf 214 zuzuleiten. Eine Schmiermittelpumpe 210 setzt das Schmiermittel unter Druck und fördert es durch eine Druckleitung 212 auf die konische Mutter 164. In einer solchen Anordnung kann ein weiteres Dichtelement auf der Seite des Wälzlagers vorgesehen sein, die der Pumpstufe zugewandt ist, welche die Rotorscheiben 140 umfasst.

Anhand der Fig. 4 bis 7 sollen weitere Gestaltungsmöglichkeiten aufgezeigt werden.

In Fig. 4 ist das Wälzlager 150 als Schrägkugellager derart ausgeführt, dass die Wälzelemente 186 durch Verschieben von Innenring 184 und Außenring 182 in Richtung der Wellenachse 112 eingefüllt werden können. Dies bietet eine vereinfachte Möglichkeit, den Flansch 192 und den Wall 194 einstückig mit dem Außenring 182 auszuführen. Der Innenring 184 weist eine Stufe auf, durch die die Spritzkante 196 gebildet wird, welche eine dynamische Dichtung ist. An dieser Kante 196 wird Schmiermittel vom Innenring 184 ab- und in das Volumen 198 hineingeschleudert. Der Ablaufkanal 190 mündet an den Flansch 194 angrenzend in das Volumen 198. Ist das Wälzlager so orientiert, dass die Schwerkraft in Fig. 4 auf die untere Blattkante zeigt, entspricht dies dem tiefsten Punkt, so dass ein besonders guter Ablauf des Schmiermittels aus dem Volumen 198 erreicht wird.

In Fig. 5 ist das Wälzlager als Rillenkugellager gestaltet. Ein ringartiges Dichtungsbauteil 218 steht in berührendem Kontakt mit dem Außenring 182. Beide sind zusammen in elastischen Ringen 170, 172 und 174 schwingfähig gehaltert. Das Bauteil 218 enthält den Ablaufkanal 190 und umschließt das Volumen 198 radial nach innen, radial nach außen und axial aus dem Lager herausführend, also in den Raumrichtungen, die von den Wälzelementen 186 wegweisen. Teil der Begrenzung ist der ringartige Wall 194, dessen Abstand zur Wellenachse 112 so bemessen ist, dass er mit einer als Spritzkante 196 wirkenden Kante des Innenringes 184 zusammenwirkt, indem an der Kante 196 Schmiermittel ab- und in das Volumen 198 hineingeschleudert wird. Eine solche Anordnung verlagert die Dichtelemente aus dem Innenraum des Wälzlagers hinaus, so dass ein Standardlager zum Einsatz kommen kann.

Die Fig. 6 und 7 zeigen weitere Gestaltungsaspekte auf. So kann, wie Fig. 6 zeigt, der Innenring 184 aus zwei Teilringen 220 und 222 aufgebaut sein, wodurch eine Teilung des Innenringes 184 in Richtung der Wellenachse 112 entsteht. Diese Teilung ist nicht an eine nachfolgend beschriebene Abdichtung auf beiden Seiten des Wälzlagers gekoppelt. Die Teilung erleichtert die Herstellung des als Rillenlager gestalteten Wälzlagers, da beim Befüllen keine Verschiebung der Ringe gegeneinander in radialer Richtung erfolgen muss. Dadurch können besonders kleine Spalte zwischen ruhenden und drehenden Bauteilen erreicht werden.

Das Wälzlager nach Fig. 6 weist Dichtungen in beiden Achsrichtungen auf. Das dem Teilring 222 zugeordnete Volumen 198 ist durch einstückig mit dem Außenring 182 geformte Strukturen begrenzt. Teilring 220 weist einen umlaufenden Vorsprung 224 auf. Dieser Vorsprung 224 wirkt als dynamische Dichtung, indem bei rotierendem Ring Schmiermittel abgespritzt wird. Je nach Orientierung der Vakuumpumpe gelangt dieses Schmiermittel in ein dem Teilring 220 zugeordnetes Volumen 198'. Dieses wird vom Außenring 182 und einem Flanschbauteil 230 begrenzt.

Das Flanschbauteil 230 ist teilweise in perspektivischer Ansicht in Fig. 7 dargestellt. Es weist einen ringförmig am radial inneren Rand umlaufenden Wall 194 auf. Der Flanschbereich weist Stege 232 auf, die sich in radialer Richtung auf dem Flansch 194 erstrecken. Zwischen zwei benachbarten Stegen 232 entsteht ein Ablaufkanal 190, der im montierten Zustand von Stegen 232, Flansch 194 und Außenring 182 begrenzt wird. Ein solches Bauteil ist preisgünstig herstellbar, leicht montierbar und kann in bestehenden Vakuumpumpen und/oder Wälzlagern nachgerüstet werden. In einer Abwandlung können Stege alternativ oder zusätzlich zu den Stegen 232 auf der Stirnseite des Wälzlagers vorgesehen sein. Hierdurch wird eine stabile Geometrie erreicht, das heißt auch bei hohen Axialkräften und langen Einwirkzeiten solcher Kräfte oder bei hohen Temperaturen ist die Veränderung des Querschnitts des Ablaufkanals nur sehr gering.

Die verschiedenen Gestaltungselemente der gezeigten Beispiele können untereinander kombiniert werden.

### Bezugszahlen

- 10: Höhe
- 12: Höhe
- 100: Vakuumpumpe
- 102: Ansaugöffnung
- 104: Gasauslass
- 106: Gehäuse
- 106a: Gehäuseteil
- 106b: Gehäuseteil
- 110: Welle
- 112: Wellenachse
- 114: Pumpstufe
- 116: Holweckpumpstufe
- 120: Antrieb
- 122: Motormagnet
- 124: Motorspule
- 130: Permanentmagnetlager
- 132: Rotormagnetringe
- 134: Statormagnetringe
- 140: Rotorscheibe
- 142: Zylinder
- 144: Holweckstator
- 146: Nabe
- 148: Statorscheibe
- 150: Wälzlager
- 152: Dichtelement
- 154: Stirnseite des Wälzlagers 150
- 160: Schmiermittelspeicher
- 162: Docht
- 164: konische Mutter
- 166: Rückführung
- 168: Radialfördermittel
- 170: Ring
- 172: Ring
- 174: Ring
- 182: Außenring
- 184: Innenring
- 186: Wälzelemente
- 188: Käfig
- 190: Ablaufkanal
- 190': Ablaufkanal
- 192: Flansch
- 194: Wall
- 196: Spritzkante
- 198: Volumen
- 198': Volumen
- 210: Schmiermittelpumpe
- 212: Druckleitung
- 214: Schmiermittelpumpenzulauf
- 218: Dichtungsbauteil
- 220: Teilring
- 222: Teilring
- 224: Vorsprung
- 230: Flanschbauteil
- 232: Stege

## Patentansprüche

1. Wälzlager insbesondere für eine Vakuumpumpe mit wenigstens einem Innenring (184), wenigstens einem Außenring (182) und Wälzelementen (186), wobei das Wälzlager (150) wenigstens ein dynamisches Dichtelement (152) und wenigstens einen Ablaufkanal (190, 190') aufweist, der als ein eine Verbindung zwischen einem von dem Dichtelement (152) begrenzten Volumen (198, 198') und einer außerhalb des Wälzlagers (150) vorgesehenen Rückführung (166) bildender Ablaufkanal ausgebildet ist,
**dadurch gekennzeichnet,**
**dass** das dynamische Dichtelement (152) eine auf einer Außenfläche des Innenrings (184) angeordnete Spritzkante (196) umfasst.

2. Vakuumpumpe mit wenigstens einer Pumpstufe (114, 116) und wenigstens einem schwingfähig gefassten Wälzlager (150) nach Anspruch 1.

3. Vakuumpumpe nach Anspruch 2, **dadurch gekennzeichnet, dass** das Dichtelement (152) auf der der Pumpstufe (114, 116) zugewandten Seite einer Ebene der Wälzelemente (150) angeordnet ist.

4. Vakuumpumpe nach Anspruch 3, **dadurch gekennzeichnet, dass** das Dichtelement (152) ein statisches Dichtelement aufweist, welches mit dem Ablaufkanal (190, 190') zusammenwirkt.

5. Vakuumpumpe nach Anspruch 4, **dadurch gekennzeichnet, dass** das statische Dichtelement (152) einen umlaufenden Wall (194) aufweist, der mit dem Außenring (182) und einem Flansch (192) ein Volumen (198) begrenzt, in welchem das Schmiermittel sammelbar ist, und dass ein Ablaufkanal (190) zum Abführen des Schmiermittels aus dem Volumen (198) vorgesehen ist.

6. Vakuumpumpe nach Anspruch 5, **dadurch gekennzeichnet, dass** der umlaufende Wall (194) und der Flansch (192) einstückig ausgeführt sind.

7. Vakuumpumpe nach Anspruch 5, **dadurch gekennzeichnet, dass** der Außenring (182), der umlaufende Wall (194) und der Flansch (192) einstückig ausgeführt sind.

8. Vakuumpumpe nach einem der Ansprüche 2 bis 7, **dadurch gekennzeichnet, dass** das Dichtelement (152) ein dynamisches Dichtelement umfasst.

9. Vakuumpumpe nach Anspruch 8, **dadurch gekennzeichnet, dass** das dynamische Dichtelement (152) auf einer Außenfläche des Innenringes (184) einen Vorsprung (224) umfasst.

10. Vakuumpumpe nach Anspruch 2 oder 3, **dadurch gekennzeichnet, dass** das Dichtelement (152) einen umlaufenden Wall (194) aufweist, der mit dem Außenring (182) und dem Flansch (192) ein Volumen (198, 198') begrenzt, in welchem das Schmiermittel gesammelt wird, dass ein Ablaufkanal (190, 190') zum Abführen des Schmiermittels vorgesehen ist, und dass eine Spritzkante (196) oder ein Vorsprung (224) vorgesehen ist, durch welche das Schmiermittel dem Volumen (198, 198') zuführbar ist.

11. Vakuumpumpe nach einem der Ansprüche 2 bis 10, **dadurch gekennzeichnet, dass** die Vakuumpumpe (100) eine von dem wenigstens einen Wälzlager (150) unterstützte schnell drehende Welle (110) aufweist.

12. Vakuumpumpe nach Anspruch 2, **dadurch gekennzeichnet, dass** die wenigstens eine Pumpstufe einen molekularen Pumpabschnitt (114, 116) aufweist.

## Claims

1. A roller bearing in particular for a vacuum pump with at least one inner ring (184), at least one outer ring (182) and roller elements (186) wherein the roller bearing (150) comprises at least one dynamic sealing element (152) and at least one outlet channel (190, 190'), which is formed as an outlet channel forming a connection between a volume (198, 198') delimited by the sealing element (152) and a feedback (166) provided outside the roller bearing (150),
**characterised in that**
the dynamic sealing element (152) has a splash edge (196) arranged on an outer face of the inner ring (184).

2. A vacuum pump with at least one pumping stage (114, 116) and at least one roller bearing (150) according to claim 1 held to be capable of oscillating.

3. A vacuum pump according to claim 2, **characterised in that** the sealing element (152) is arranged on the side of a plane of the roller element (150) facing the pumping stage (114, 116).

4. A vacuum pump according to claim 3, **characterised in that** the sealing element (152) comprises a static sealing element, which co-operates with the outlet channel (190, 190').

5. A vacuum pump according to claim 4, **characterised in that** the static sealing element (152) comprises a surrounding wall (194) which with the outer ring (182) and a flange (192) delimits a volume (198) in which the lubricant is collectable, and **in that** an outlet channel (190) is provided for removing the lubricant from the volume (198).

6. A vacuum pump according to claim 5, **characterised in that** the surrounding wall (194) and the flange (192) are formed in one piece.

7. A vacuum pump according to claim 5, **characterised in that** the outer ring (182), the surrounding wall (194) and the flange (192) are formed in one piece.

8. A vacuum pump according to any of claims 2 to 7, **characterised in that** the sealing element (152) comprises a dynamic sealing element.

9. A vacuum pump according to claim 8, **characterised in that** the dynamic sealing element (152) comprises a projection (224) on an outer face of the inner ring (184).

10. A vacuum pump according to claim 2 or 3, **characterised in that** the sealing element (152) has a surrounding wall (194), which with the outer ring (182) and the flange (192) delimits a volume (198, 198') in which the lubricant is collected, **in that** an outlet channel (190, 190') is provided for the removal of the lubricant, and **in that** there is provided a splash edge (196) or a projection (224), by means of which the lubricant is suppliable to the volume (198, 198').

11. A vacuum pump according to any of claims 2 to 10, **characterised in that** the vacuum pump (100) has a high-speed shaft (110) supported by the at least one roller bearing (150).

12. A vacuum pump according to claim 2, **characterised in that** the at least one pumping stage has a molecular pump section (114, 116).

## Revendications

1. Palier à roulement, en particulier pour une pompe à vide, comprenant au moins une bague interne (184), au moins une bague externe (182) et des éléments de roulement (186), le palier à roulement (150) présentant au moins un élément d'étanchéité dynamique (152) et au moins un canal d'écoulement (190, 190') qui est réalisé sous la forme d'un canal d'écoulement formant une liaison entre un volume (198, 198') limité par l'élément d'étanchéité (152) et un retour (166) prévu à l'extérieur du palier à roulement (150),
**caractérisé en ce que**
l'élément d'étanchéité dynamique (152) comprend un rebord antiéclaboussures (196) disposé sur une surface extérieure de la bague interne (184).

2. Pompe à vide comprenant au moins un étage de pompe (114, 116) et au moins un palier à roulement (150) selon la revendication 1, réalisé de manière à pouvoir osciller.

3. Pompe à vide selon la revendication 2, **caractérisée en ce que** l'élément d'étanchéité (152) est disposé du côté tourné vers l'étage de pompe (114, 116) d'un plan des éléments de roulement (150).

4. Pompe à vide selon la revendication 3, **caractérisée en ce que** l'élément d'étanchéité (152) présente un élément d'étanchéité statique qui coopère avec le canal d'écoulement (190, 190').

5. Pompe à vide selon la revendication 4, **caractérisée en ce que** l'élément d'étanchéité statique (152) présente une paroi périphérique (194) qui, avec la bague extérieure (182) et une bride (192), délimite un volume (198) dans lequel le lubrifiant peut s'accumuler, et **en ce qu'**un canal d'écoulement (190) est prévu pour évacuer le lubrifiant hors du volume (198).

6. Pompe à vide selon la revendication 5, **caractérisée en ce que** la paroi périphérique (194) et la bride (192) sont réalisées d'une seule pièce.

7. Pompe à vide selon la revendication 5, **caractérisée en ce que** la bague externe (182), la paroi périphérique (194) et la bride (192) sont réalisées d'une seule pièce.

8. Pompe à vide selon l'une quelconque des revendications 2 à 7, **caractérisée en ce que** l'élément d'étanchéité (152) comprend un élément d'étanchéité dynamique.

9. Pompe à vide selon la revendication 8, **caractérisée en ce que** l'élément d'étanchéité dynamique (152) comprend une saillie (224) sur une surface extérieure de la bague interne (184).

10. Pompe à vide selon la revendication 2 ou 3, **caractérisée en ce que** l'élément d'étanchéité (152) présente une paroi périphérique (194) qui, avec la bague externe (182) et la bride (192), délimite un volume (198, 198') dans lequel le lubrifiant s'accumule, **en ce qu'**un canal d'écoulement (190, 190') est prévu pour l'évacuation du lubrifiant, et **en ce qu'**un rebord antiéclaboussures (196) ou une saillie (224) est prévu(e), par le biais duquel ou de laquelle le lubrifiant peut être acheminé au volume (198, 198').

11. Pompe à vide selon l'une quelconque des revendications 2 à 10, **caractérisée en ce que** la pompe à vide (100) présente un arbre à rotation rapide (110) supporté par l'au moins un palier à roulement (150).

12. Pompe à vide selon la revendication 2, **caractérisée en ce que** l'au moins un étage de pompe présente une portion de pompe moléculaire (114, 116).
